# EUROPEAN PATENT APPLICATION

(11) **EP 4 210 129 A1**
(43) Date of publication of application: **12.07.2023**
(21) Application number: 22771824.4
(22) Date of filing: 18.03.2022
(51) Int. Cl.: H01M 4/13, H01M 4/62, H01M 10/052, H01M 4/02

(54) **ELECTRODE AND SECONDARY BATTERY COMPRISING ELECTRODE**

(30) Priority: 19.03.2021 KR 20210036124
(71) Applicant: LG Energy Solution, Ltd., Seoul 07335 (KR)
(72) Inventor: KIM, Tae Gon, Daejeon 34122 (KR); JUNG, Wang Mo, Daejeon 34122 (KR); KWAK, Min, Daejeon 34122 (KR)
(74) Representative: Hoffmann Eitle
(86) International application number: PCT/KR2022/003846
(87) International publication number: WO 2022/197158

(57) **Abstract**

The present invention relates to an electrode and a secondary battery comprising same, wherein the electrode includes an electrode active material layer, the electrode active material layer comprises: an electrode active material; a conductive material; and sodium dodecyl sulfate (SDS), the conductive material includes a carbon nanotube structure in which 2 to 5,000 single-walled carbon nanotube units are bonded to each other, and the weight ratio of the carbon nanotube structure and the SDS is 1:3 to 1:30.

## Description

### TECHNICAL FIELD

### Cross-reference to Related Applications

This application claims priority from Korean Patent Application No. 10-2021-0036124, filed on March 19, 2021, the disclosure of which is incorporated by reference herein.

### Technical Field

The present invention relates to an electrode and a secondary battery including the same, wherein the electrode includes an electrode active material layer, the electrode active material layer includes an electrode active material; a conductive agent; and sodium dodecyl sulfate (SDS), the conductive agent includes a carbon nanotube structure in which 2 to 5,000 single-walled carbon nanotube units are bonded to each other, and a weight ratio of the carbon nanotube structure to the SDS may be in a range of 1:3 to 1:30.

### BACKGROUND ART

A typical example of an electrochemical device using electrochemical energy may be a secondary battery, and there is a trend that its usage area is expanding more and more. In recent years, demand for secondary batteries as an energy source has been significantly increased as technology development and demand with respect to portable devices, such as portable computers, mobile phones, and cameras, have increased, and, among these secondary batteries, lithium secondary batteries having high energy density, i.e., high capacity, have been subjected to considerable research and have been commercialized and widely used.

In general, a secondary battery is composed of a positive electrode, a negative electrode, an electrolyte, and a separator. The positive electrode and the negative electrode each are generally composed of an electrode collector and an electrode active material layer formed on the electrode collector, and the electrode active material layer is prepared by a method in which the electrode current collector is coated with an electrode slurry composition including an electrode active material, a conductive agent, and a binder, dried and then rolled.

Typically, a point-type conductive agent, such as carbon black, has mainly been used as the conductive agent for a secondary battery, but, with respect to the point-type conductive agent, there was a problem in that an effect of improving electrical conductivity was not sufficient. In order to improve this problem, studies on the application of a line-type conductive agent, such as carbon nanotube (CNT) or carbon nanofiber (CNF), and a plane-type conductive agent, such as graphene, are being actively conducted.

However, the plane-type conductive agent, such as graphene, has excellent electrical conductivity, but has a problem in that it is difficult to prepare thin single layer graphene, and, in a case in which thick graphene is used, battery efficiency may be reduced. Also, with respect to the plane-type conductive agent, electrolyte solution mobility may be limited in the battery due to a wide planar contact.

With respect to the line-type conductive agent such as carbon nanotube or carbon nanofiber, electrical conductivity is excellent, but, since dispersibility in a slurry is poor due to the nature of the material itself growing in a bundle type or an entangled type, there is a problem in that coating properties and processability are poor and the line-type conductive agent is not evenly distributed in the electrode active material layer. In order to improve this problem, there have been attempts to improve the dispersibility by introducing a functional group into the line-type conductive agent, but, in this case, since a surface side reaction occurs due to the presence of the functional group, there is a problem in that electrochemical properties are deteriorated.

Also, in order to use carbon nanotubes, it is common to use a conductive agent dispersion in which bundle type carbon nanotubes are dispersed by using a dispersant. However, since many surface defects of the carbon nanotubes occur due to external force in the dispersion process, mechanical strength and electrical conductivity of the carbon nanotubes are reduced, and thus, there is a problem in that electrode resistance is increased and lifetime of the battery is reduced. Furthermore, since sizes of the dispersed carbon nanotubes are not uniform, there is also a problem in that electrode adhesion and electrode lifetime are reduced.

Therefore, there is a need to develop an electrode which includes carbon nanotubes having a minimum of surface defects and having a relatively constant size.

### DISCLOSURE OF THE INVENTION

### TECHNICAL PROBLEM

An aspect of the present invention provides an electrode in which electrode adhesion, conductivity, and life characteristics are improved by including a carbon nanotube structure having a minimum of surface defects and having a relatively constant size.

Another aspect of the present invention provides a secondary battery including the electrode.

### TECHNICAL SOLUTION

According to an aspect of the present invention, there is provided an electrode including an electrode active material layer, wherein the electrode active material layer includes an electrode active material; a conductive agent; and sodium dodecyl sulfate (SDS), wherein the conductive agent includes a carbon nanotube structure in which 2 to 5,000 single-walled carbon nanotube units are bonded to each other, and a weight ratio of the carbon nanotube structure to the SDS is in a range of 1:3 to 1:30.

According to another aspect of the present invention, there is provided a secondary battery including the electrode.

### ADVANTAGEOUS EFFECTS

Since an electrode according to the present invention includes a network structure in which carbon nanotube structures in the form of a rope (in the form of a long fiber) are connected to each other, a conductive path in the electrode may be effectively formed. Accordingly, electrical conductivity in the electrode may be significantly improved even with a very small amount of conductive agent. Also, since an electrode active material layer is firmly fixed by the carbon nanotube structures constituting the network structure, an effect of improving electrode adhesion is obtained. In addition, since sodium dodecyl sulfate (SDS) is included in the electrode and the SDS minimizes occurrence of defects on a surface of the carbon nanotube structure when the carbon nanotube structure is formed, resistance of the electrode may be reduced and lifetime of a battery may be improved. Furthermore, since diameters of the carbon nanotube structures are formed at a constant level, the electrode adhesion and life characteristics of the battery may be further improved.

### BRIEF DESCRIPTION OF THE DRAWINGS

FIG. 1 is X-ray photoelectron spectroscopy (XPS) analysis graphs of carbon nanotube structures of Samples 1 to 5;
FIG. 2 is a scanning electron microscope (SEM) image of a carbon nanotube structure dispersion of Preparation Example 1;
FIG. 3 is an SEM image of a carbon nanotube structure dispersion of Preparation Example 3;
FIG. 4 is an SEM image of an electrode of Example 1; and
FIG. 5 is an SEM image of an electrode of Comparative Example 1.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used in the present specification are used to merely describe exemplary embodiments, but are not intended to limit the invention. The terms of a singular form may include plural forms unless referred to the contrary.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression "%" denotes wt% unless explicitly stated otherwise.

In the present specification, the expression "specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mini II by BEL Japan Inc.

Hereinafter, the present invention will be described in detail.

### Electrode

An electrode according to the present invention includes an electrode active material layer, wherein the electrode active material layer includes an electrode active material; a conductive agent; and sodium dodecyl sulfate (SDS), wherein the conductive agent includes a carbon nanotube structure in which 2 to 5,000 single-walled carbon nanotube units are bonded to each other, and a weight ratio of the carbon nanotube structure to the SDS may be in a range of 1:3 to 1:30.

The electrode may include an electrode active material layer. The electrode may further include a current collector, and, in this case, the electrode active material layer may be disposed on one surface or both surfaces of the current collector.

The current collector is not particularly limited as long as it has conductivity without causing adverse chemical changes in a battery, and, for example, copper, stainless steel, aluminum, nickel, titanium, alloys thereof, these materials that are surface-treated with one of carbon, nickel, titanium, silver, or the like, or fired carbon may be used.

The current collector may typically have a thickness of 3 um to 500 µm, and microscopic irregularities may be formed on the surface of the collector to improve the adhesion of a negative electrode active material. Also, the electrode collector, for example, may be used in various shapes such as that of a film, a sheet, a foil, a net, a porous body, a foam body, a non-woven fabric body, and the like.

The electrode active material layer may include an electrode active material, a conductive agent, and SDS.

The electrode active material may be a positive electrode active material or negative electrode active material commonly used in the art, but types thereof are not particularly limited.

For example, as the positive electrode active material, a lithium oxide including lithium and at least one metal such as cobalt, manganese, nickel, or aluminum may be used. Specifically, the lithium oxide may include lithium-manganese-based oxide (e.g., LiMnO₂, LiMn₂O, LiMnO₃, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y1}Mn_{Y1}O₂ (where 0<Y1<1), LiMn_{2-Z1}Ni_{z1}O₄ (where 0<Z1<2), etc.), lithium-nickel-cobalt-based oxide (e.g., LiNi_{1-Y2}Co_{Y2}O₂ (where 0<Y2<1), lithium-manganese-cobalt-based oxide (e.g., LiCo_{1-Y3}Mn_{Y3}O₂ (where 0<Y3<1), LiMn_{2-Z2}Co_{z2}O₄ (where 0<Z2<2), etc.), lithium-nickel-cobalt-manganese-based oxide (e.g., Li(Ni_{P1}Co_{Q1}Mn_{R1})O₂ (where 0<P1<1, 0<Q1<1, 0<R1<1, and P1+Q1+R1=1) or Li (Ni_{P2}Co_{Q2}Mn_{R2})O₄ (where 0<P2<2, 0<Q2<2, 0<R2<2, and P2+Q2+R2=2), etc.), or lithium-nickel-cobalt-manganese-other metals (M) oxide (e.g., Li(Ni_{P3}Co_{Q3}Mn_{R3}M¹_{S})O₂ (where M¹ is selected from the group consisting of aluminum (Al), copper (Cu), iron (Fe), vanadium (V), chromium (Cr), titanium (Ti), zirconium (Zr), zinc (Zn), tantalum (Ta), niobium (Nb), magnesium (Mg), boron (B), tungsten (W), and molybdenum (Mo), and P3, Q3, R3, and S are atomic fractions of each independent elements, wherein 0<P3<1, 0<Q3<1, 0<R3<1, 0<S<1, and P3+Q3+R3+S=1), etc.), and any one thereof or a compound of two or more thereof may be included.

The negative electrode active material, for example, may include a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOᵥ(0<v<2), SnO₃, vanadium oxide, and lithium vanadium oxide; or a composite including the metallic compound and the carbonaceous material such as a Si-C composite, an Ag-C composite, or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material.

The electrode active material as described above may be included in an amount of 70 wt% to 99.5 wt%, for example, 80 wt% to 99 wt% based on a total weight of the electrode active material layer. When the amount of the electrode active material satisfies the above range, excellent energy density, electrode adhesion, and electrical conductivity may be achieved.

The conductive agent may include a carbon nanotube structure.

The carbon nanotube structure may include a plurality of single-walled carbon nanotube units. Specifically, the carbon nanotube structure may be a carbon nanotube structure in which 2 to 5,000 single-walled carbon nanotube units are bonded to each other, and, more specifically, the carbon nanotube structure may be a carbon nanotube structure in which 2 to 4,500 single-walled carbon nanotube units are bonded to each other. For example, in consideration of dispersibility of the carbon nanotube structure and durability of the electrode, the carbon nanotube structure is most preferably a carbon nanotube structure in which 2 to 50 single-walled carbon nanotube units are bonded to each other.

The single-walled carbon nanotube units may be arranged side by side and bonded in the carbon nanotube structure (cylindrical structure having flexibility in which the units are bonded such that long axes of the units are parallel to each other) to form the carbon nanotube structure. The carbon nanotube structures are interconnected in the electrode to form a network structure.

Typical electrodes including carbon nanotubes are generally prepared by preparing a conductive agent dispersion by dispersing bundle type or entangled type carbon nanotubes (form in which single-walled carbon nanotube units or multi-walled carbon nanotube units are attached or entangled with each other) in a dispersion medium and then using the conductive agent dispersion. In this case, since the carbon nanotubes are fully dispersed in the typical conductive agent dispersion, the carbon nanotubes are present as the conductive agent dispersion in which single-stranded carbon nanotube units are dispersed. With respect to the typical conductive agent dispersion, since the carbon nanotube units are easily cut by an excessive dispersion process, the carbon nanotube units have a length shorter than an initial length. Also, the carbon nanotube units may also be easily cut during a rolling process of the electrode, and the carbon nanotube units may additionally be cut due to changes in volume of the electrode active material during operation of the battery. Accordingly, since conductivity of the electrode is reduced, input characteristics, output characteristics, and life characteristics of the battery may be degraded. Furthermore, with respect to the multi-walled carbon nanotube units, structural defects are high due to a mechanism in which nodes grow (the units are not smooth and linear, but the nodes are present due to defects generated during the growth process). Thus, the multi-walled carbon nanotube units are more easily cut in the dispersion process, and the short-cut multi-walled carbon nanotube units may be easily aggregated by π-π stacking caused by a carbon's surface structure of the unit. Accordingly, it is more difficult for the multi-walled carbon nanotube units to be more uniformly dispersed in the electrode slurry.

Alternatively, with respect to the carbon nanotube structure included in the electrode of the present invention, since the carbon nanotube structure has a form in which 2 to 5,000 single-walled carbon nanotube units maintaining relatively high crystallinity without structural defects are bonded side by side, the single-walled carbon nanotube units may not be cut during the operation of the battery and their length may be smoothly maintained, and thus, the conductivity of the electrode may be maintained. Also, since the conductivity of the electrode is increased due to high conductivity of the single-walled carbon nanotube unit having high crystallinity, the input characteristics, output characteristics, and life characteristics of the battery may be significantly improved. Furthermore, since the carbon nanotube structures are interconnected in the electrode to have a network structure, an excessive change in the volume of the electrode active material may be suppressed, a strong conductive network may be secured at the same time, and electrode adhesion may be significantly improved by inhibiting exfoliation of the electrode active material.

In the carbon nanotube structure, the single-walled carbon nanotube unit may have an average diameter of 0.5 nm to 10 nm, particularly 1 nm to 9 nm, and more particularly 1 nm to 6 nm. When the average diameter is satisfied, the conductivity in the electrode may be maximized even with a very small amount of the conductive agent. The average diameter corresponds to an average value of top 100 single-walled carbon nanotubes with a larger diameter and bottom 100 single-walled carbon nanotubes when the prepared electrode is observed by a transmission electron microscope (TEM).

In the carbon nanotube structure, the single-walled carbon nanotube unit may have an average length of 1 um to 100 µm, for example, 5 um to 50 um. When the average length is satisfied, since a long conductive path for conductive connection between the electrode active materials may be formed and a unique network structure may be formed, the conductivity in the electrode may be maximized even with a very small amount of the conductive agent. The average length corresponds to an average value of top 100 single-walled carbon nanotubes with a larger length and bottom 100 single-walled carbon nanotubes when the prepared electrode is observed by a TEM.

The single-walled carbon nanotube unit may have a specific surface area of 500 m²/g to 1,000 m²/g, for example, 600 m²/g to 800 m²/g. When the specific surface area satisfies the above range, since the conductive path in the electrode may be smoothly secured by the wide specific surface area, the conductivity in the electrode may be maximized even with a very small amount of the conductive agent. The specific surface area of the single-walled carbon nanotube unit may specifically be calculated from a nitrogen gas adsorption amount at a liquid nitrogen temperature (77K) using BELSORP-mini II by BEL Japan Inc.

The carbon nanotube structure may have an average diameter of 2 nm to 200 nm, particularly 5 nm to 150 nm, and more particularly 5 nm to 50 nm, for example, 7 nm to 20 nm. When the average diameter satisfies the above range, since it is effective in forming a conductive network structure and is advantageous in connecting the active materials, excellent electrical conductivity may be achieved. The average diameter corresponds to an average value of diameters of top 100 carbon nanotube structures with a larger average diameter and bottom 100 carbon nanotube structures when the prepared electrode is observed by a scanning electron microscope (SEM).

The carbon nanotube structure may have an average length of 1 um to 500 um, particularly 5 um to 300 µm, and more particularly 5 um to 150 um. When the average length satisfies the above range, since it is effective in forming the conductive network structure and is advantageous in connecting the active materials, excellent electrical conductivity may be achieved. The average length corresponds to an average value of lengths of top 100 carbon nanotube structures with a larger average length and lengths of bottom 100 carbon nanotube structures when the prepared electrode is observed by an SEM.

The carbon nanotube structure may be included in an amount of 0.01 wt% to 0.5 wt% in the electrode active material layer, and may specifically be included in an amount of 0.01 wt% to 0.3 wt%. When the amount of the carbon nanotube structure satisfies the above range, since the conductive path in the electrode may be secured, the life characteristics of the battery may be improved while electrode resistance is maintained at a low level. In a case in which the bundle type carbon nanotubes are fully dispersed (as a typical dispersion method in which the carbon nanotubes are dispersed so that single-stranded carbon nanotube units are separated from each other as much as possible) when the conductive agent dispersion is prepared, the carbon nanotube structure is not generated, or is generated in a very small amount (for example, 0.0005 wt%) even if it is unintentionally generated. That is, the above amount range may never be achieved in the usual way.

With respect to the related art in which the electrode includes multi-walled carbon nanotube units, a high amount (e.g., greater than 0.5 wt%) of the multi-walled carbon nanotube unit has to be used to compensate for low conductivity of the multi-walled carbon nanotube unit. Also, even in a case in which the electrode is prepared by using a conductive agent dispersion in which the single-walled carbon nanotube units are completely dispersed, the single-walled carbon nanotube units may not be used in a low amount due to the problem that the single-walled carbon nanotube units are cut.

In contrast, the carbon nanotube structure included in the electrode of the present invention is in the form in which 2 to 5,000 single-walled carbon nanotube units are bonded side by side. Thus, since the carbon nanotube structure may not be cut even during the operation of the battery and their length may be smoothly maintained, the conductivity of the electrode may be maintained and the conductivity of the electrode may be smoothly secured due to the high conductivity of the single-walled carbon nanotube unit. Accordingly, the input characteristics, output characteristics, and life characteristics of the battery may be excellent even if the amount of the carbon nanotube structure in the electrode is low.

Although not essential, the single-walled carbon nanotube unit may be surface-treated through an oxidation treatment or nitridation treatment to improve affinity with polyvinylidene fluoride.

The SDS may be disposed on the carbon nanotube structure. Specifically, the SDS is disposed on the single-walled carbon nanotube unit included in the carbon nanotube structure. The SDS acts as a kind of 'surface protection agent' that minimizes occurrence of surface defects of the carbon nanotube structure on the carbon nanotube structure. Also, during the formation of the carbon nanotube structure, the SDS acts as a kind of `dispersion stabilizer' so that the carbon nanotube structures are smoothly dispersed, and serves to allow diameters of the carbon nanotube structures to be at a constant level.

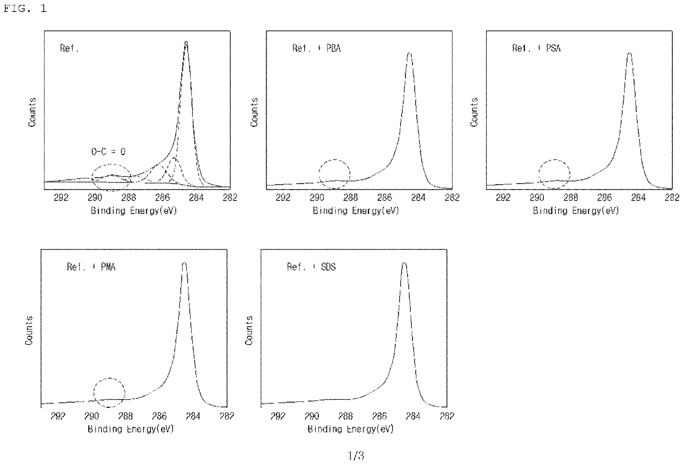

FIG. 1 is graphs illustrating X-ray photoelectron spectroscopy (XPS) analysis results of carbon nanotube structures of Samples 1 to 5 (Samples 1 to 5 correspond to (a) to (e) in order). Sample 1 is one in which no surface defect prevention material is disposed on a surface of the carbon nanotube structure, and Samples 2 to 5 are those in which PBA (Pyrene Butyric Acid), PSA (Pyrene Sulfonic Acid), PMA (Pyrene Methyl-Amine), and SDS (Sodium Dodecyl-Sulfate) are disposed on surfaces of the carbon nanotube structures, respectively. Referring to FIG. 1, with the exception of Sample 5 using the SDS, since defects occur on the surfaces of the carbon nanotubes by a dispersion process caused by a mechanical external force, it may be understood that a fine peak (a portion marked with a circle in FIG. 1) due to bonding of carbon and oxygen appears. That is, in a case in which SDS containing a sulfonate anion functional group (SO₃⁻) at an end of a linear chain molecular structure is used, the SDS may minimize the defects of the carbon nanotube structure even during the dispersion process while linearly wrapping around the surface of the carbon nanotube structure. In the case that the SDS is used, the bonding of carbon and oxygen was not observed at all in the XPS surface analysis results of FIG. 1. Also, dispersion uniformity of the carbon nanotube structure may be improved by a repulsive force of the sulfonate anion functional groups (SO₃⁻) at the end of the SDS.

A weight ratio of the carbon nanotube structure to the SDS may be in a range of 1:3 to 1:30, particularly 1:3 to 1:20, and more particularly 1:5 to 1:10. In a case in which the weight ratio of the carbon nanotube structure to the SDS is outside the range of 1:3 to 1:30 and an amount of the SDS is decreased, there is a problem in that an effect of minimizing the surface defects of the carbon nanotube structure by the SDS is insufficient. In contrast, in a case in which the amount of the SDS is increased outside the range of 1:3 to 1:30, since occurrence of a side reaction in the electrode is severe, there is a problem in that the electrical conductivity is reduced.

Most preferably, the weight ratio of the carbon nanotube structure to the SDS may be in a range of 1:5 to 1:10. In a case in which the range of 1:5 to 1:10 is satisfied, since excessive dispersion (debundling) of the bundle type carbon nanotubes, as a raw material, may be effectively suppressed while the surface defects of the carbon nanotube structure may be minimized, a carbon nanotube structure with desired diameter and length may be derived.

The SDS may be included in an amount of 0.1 wt% to 5 wt%, particularly 0.1 wt% to 3 wt%, and more particularly 0.1 wt% to 1.5 wt%, for example, 0.4 wt% to 1.0 wt% in the electrode active material layer. In a case in which the above range is satisfied, the surface defects of the carbon nanotube structure may be effectively prevented by the SDS. Also, the range is a low level amount, wherein the reason for this is that the SDS is not disposed on completely dispersed single-walled carbon nanotube units, but on the carbon nanotube structure in which the single-walled carbon nanotube units are bonded side by side. Specifically, when the carbon nanotube structure, in which the single-walled carbon nanotube units are bonded side by side, rather than the completely dispersed single-walled carbon nanotube units is formed, a degree of separation of the bundle type carbon nanotubes is small, and, accordingly, since the single-walled carbon nanotube units in the carbon nanotube structure are not directly subjected to a shear force, possibility of the occurrence of the surface defects is relatively low. Thus, the surface defects of the carbon nanotube structure may be minimized even with a small amount of the SDS (0.1 wt% to 5 wt%) .

The electrode active material layer may further include polyvinylidene fluoride. The polyvinylidene fluoride may be a material which starts to be included in the electrode from the conductive agent dispersion required for preparing the electrode slurry (in some cases, it may be additionally added to reinforce a role of the binder during the preparation of the electrode slurry). The polyvinylidene fluoride plays a role in helping the bundle type carbon nanotubes to be smoothly dispersed in the conductive agent dispersion.

A weight-average molecular weight of the polyvinylidene fluoride may be in a range of 10,000 g/mol to 1,000,000 g/mol, and may specifically be in a range of 100,000 g/mol to 900,000 g/mol. In a case in which the above range is satisfied, since the polyvinylidene fluoride may easily penetrate between the single-walled carbon nanotube units in the bundle type carbon nanotube, appropriate dispersion of the bundle type carbon nanotube is possible and phase stability of the conductive agent dispersion may be improved.

The polyvinylidene fluoride may be included in an amount of 0.1 wt% to 10.0 wt%, particularly 0.2 wt% to 5.0 wt%, and more particularly 0.2 wt% to 2.5 wt% in the electrode active material layer. In a case in which the above range is satisfied, the carbon nanotube structures may be uniformly dispersed, energy density of the electrode may be high, and the electrode adhesion may be excellent.

The polyvinylidene fluoride may include modified polyvinylidene fluoride modified with a hydrophilic functional group to improve affinity with the single-walled carbon nanotube unit. Specifically, the polyvinylidene fluoride may include modified polyvinylidene fluoride including at least one functional group of an acid functional group and an ester functional group. The functional groups of the modified polyvinylidene fluoride may interact with the single-walled carbon nanotube unit to further improve the electrode adhesion while improving the dispersibility of the carbon nanotube structure.

The functional group may be included in an amount of 0.1 wt% to 5 wt% in the modified polyvinylidene fluoride, and may be specifically included in an amount of 0.3 wt% to 3 wt%. In a case in which the above range is satisfied, the electrode adhesion may be further improved while the dispersibility of the carbon nanotube structure is further improved.

The modified polyvinylidene fluoride may be included in an amount of 1 wt% to 100 wt%, particularly 1 wt% to 50 wt%, and more particularly 1 wt% to 20 wt% based on a total weight of the polyvinylidene fluoride. In a case in which the above range is satisfied, the electrode adhesion may be further improved while the dispersibility of the carbon nanotube structure is further increased.

The electrode active material layer may further include a binder. The binder is for securing adhesion between the electrode active materials and adhesion of the electrode active material to the current collector, wherein common binders used in the art may be used, and types thereof are not particularly limited. The binder, for example, may include polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated-EPDM, a styrene-butadiene rubber (SBR), a fluorine rubber, or various copolymers thereof, and any one thereof or a mixture of two or more thereof may be used.

The binder may be included in an amount of 10 wt% or less, for example, 0.1 wt% to 5 wt% based on the total weight of the electrode active material layer. In a case in which the amount of the binder satisfies the above range, excellent electrode adhesion may be achieved while minimizing an increase in the electrode resistance.

### Method of Preparing Electrode

Next, a method of preparing the electrode of the present invention will be described.

The method of preparing the electrode of the present invention may include the steps of: (1) preparing a mixture by adding bundle type single-walled carbon nanotubes and SDS to a dispersion medium, and performing a first treatment by sonication; (2) adding polyvinylidene fluoride to the mixture and performing a second treatment by sonication to prepare a conductive agent dispersion including a carbon nanotube structure in which 2 to 5,000 single-walled carbon nanotube units are bonded to each other; and (3) forming an electrode slurry including the conductive agent dispersion and an electrode active material, wherein a weight ratio of the carbon nanotube structure to the SDS may be in a range of 1:3 to 1:30. The electrode of the above-described embodiment may be prepared by the above method. Since the SDS and the carbon nanotube structure are the same as those of the above-described embodiment, descriptions thereof will be omitted.

### (1) Preparing of the Mixture

The mixture may be prepared by performing a first treatment by sonication after adding bundle type carbon nanotubes and SDS to a dispersion medium. The bundle type carbon nanotubes are present in the form of a bundle in which the above-described single-walled carbon nanotube units are bonded, wherein the bundle type carbon nanotube includes usually 2 or more, substantially 500 or more, for example, 5,000 or more single-walled carbon nanotube units.

The bundle type single-walled carbon nanotubes may be included in an amount of 0.1 wt% to 1.0 wt%, for example, 0.2 wt% to 0.5 wt% in the mixture. When the amount of the bundle type single-walled carbon nanotubes satisfies the above range, since the bundle type single-walled carbon nanotubes are dispersed in an appropriate level, a carbon nanotube structure may be formed at an appropriate level and dispersion stability may be improved.

The SDS may be included in an amount of 0.1 wt% to 20 wt%, for example, 1 wt% to 10 wt% in the mixture. In a case in which the amount of the SDS satisfies the above range, since the bundle type single-walled carbon nanotubes are dispersed in an appropriate level, a carbon nanotube structure may be finally formed, and the SDS may be disposed on the carbon nanotube structure to act as a surface protection agent. Accordingly, the surface defects of the carbon nanotube structure may be minimized.

The dispersion medium, for example, may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ-butyrolactone, and ε-propiolactone, and any one thereof or a mixture of two or more thereof may be used, but the present invention is not limited thereto. Specifically, the dispersion medium may be N-methylpyrrolidone (NMP).

A solid content in the mixture may be in a range of 0.1 wt% to 20 wt%, for example, 1 wt% to 10 wt%. In a case in which the solid content satisfies the above range, since the bundle type single-walled carbon nanotubes are dispersed in an appropriate level, a carbon nanotube structure may be formed at an appropriate level and the dispersion stability may be improved. Also, the electrode slurry may have viscosity and elasticity suitable for an electrode preparation process, and it also contributes to increase the solid content of the electrode slurry.

A first treatment process for dispersing the bundle type carbon nanotubes in the mixture may be performed by using sonication or a mixing device such as a homogenizer, a bead mill, a ball mill, a basket mill, an attrition mill, a universal stirrer, a clear mixer, a spike mill, or a TK mixer. Among them, sonication may be preferable. In the sonication, when high-intensity ultrasonic waves are emitted into a solution, numerous vacuum bubbles are generated by extreme vibration, and these bubbles instantaneously clump together or grow, but are violently broken in a chain-wise manner by immediately following vibration. A strong shock wave is generated by a violent flow of the solution or a whirlpool phenomenon when the continuous breakage of the bubbles proceeds, and the bundle type carbon nanotubes may be dispersed (debundled) by energy of this shock wave. The sonication enables nano-level fine dispersion without cutting the single-walled carbon nanotubes in a longitudinal direction in the bundle type carbon nanotube. For this reason, the sonication is preferable.

The sonication may be as follows. Ultrasonic waves may be applied to the mixture to disperse the solid content in the mixture.

In this case, conditions under which the sonication is performed may be as follows.

The sonication may be performed at an output of 800 W to 1,500 W, and may be specifically performed at an output of 800 W to 1,200 W. The sonication may be performed for 0.5 hours to 5 hours, and may be specifically performed for 1 hour to 3 hours. When the above ranges are satisfied, the bundle type carbon nanotubes may be separated to an appropriate level to form the carbon nanotube structure. The performance time means total time during which the sonication is used, and, thus, for example, if the sonication is performed several times, the performance time means total time required for performing the sonication several times.

### (2) Preparing of the Conductive Agent Dispersion

The polyvinylidene fluoride may be added to the mixture and a second treatment may be performed by sonication.

The polyvinylidene fluoride may be included in an amount of 0.1 wt% to 20 wt% in the mixture, and may be specifically included in an amount of 1 wt% to 10 wt%. When the amount of the polyvinylidene fluoride satisfies the above range, since the bundle type single-walled carbon nanotubes are dispersed in an appropriate level, a carbon nanotube structure may be formed at an appropriate level and the dispersion stability may be improved.

Since the polyvinylidene fluoride is the same as the polyvinylidene fluoride of the above-described embodiment, a description thereof will be omitted.

A weight ratio of the bundle type carbon nanotubes to the polyvinylidene fluoride in the conductive agent dispersion may be in a range of 1:0.1 to 1:10, and may be specifically in a range of 1:1 to 1:10. In a case in which the weight ratio satisfies the above range, since the bundle type single-walled carbon nanotubes are dispersed in an appropriate level, a carbon nanotube structure may be formed at an appropriate level and the dispersion stability may be improved.

Conditions of the sonication used in the second treatment may be as follows.

The sonication may be performed at an output of 800 W to 1,500 W, and may be specifically performed at an output of 800 W to 1,200 W. The sonication may be performed for 0.5 hours to 5 hours, and may be specifically performed for 1 hour to 3 hours. When the above ranges are satisfied, the bundle type carbon nanotubes may be separated to an appropriate level to form the carbon nanotube structure. The performance time means total time during which the sonication is used, and, thus, for example, if the sonication is performed several times, the performance time means total time required for performing the sonication several times.

The above conditions are for forming a carbon nanotube structure in which 2 to 5,000 single-walled carbon nanotube units are bonded side by side in the conductive agent dispersion which is prepared by dispersing the bundle type carbon nanotubes at an appropriate level. This may be achieved only in the case where a composition of the mixture and sonication conditions are strictly controlled.

Also, the SDS may be present on the carbon nanotube structure.

### (3) Forming of the Electrode Slurry

When the conductive agent dispersion is prepared through the above-described processes, an electrode slurry is formed by mixing the conductive agent dispersion with an electrode active material. In this case, the above-described electrode active materials may be used as the electrode active material.

Also, a binder and a solvent may be further included in the electrode slurry, if necessary. In this case, the binder of the above-described embodiment may be used as the binder. The solvent, for example, may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ-butyrolactone, and ε-propiolactone, and any one thereof or a mixture of two or more thereof may be used, but the present invention is not limited thereto. The solvent may be the same or different from the dispersion medium used in the predispersion, and the solvent may preferably be N-methylpyrrolidone (NMP).

In this case, the electrode active material may be included in an amount of 70 wt% to 99.5 wt%, for example, 80 wt% to 99 wt% based on a total solid content in the electrode slurry. When the amount of the electrode active material satisfies the above range, excellent energy density, electrode adhesion, and electrical conductivity may be achieved.

Also, in a case in which the binder is further included, the binder may be included in an amount of 10 wt% or less, for example, 0.1 wt% to 5 wt% based on the total solid content in the electrode slurry.

The solid content in the electrode slurry may be in a range of 60 wt% to 80 wt%, and may be specifically in a range of 65 wt% to 75 wt%. When the above range is satisfied, migration of the conductive agent and the binder due to evaporation of the solvent may be suppressed during drying after coating with the electrode slurry, and an electrode having excellent electrode adhesion and electrical conductivity may be prepared. Furthermore, a high-quality electrode with little deformation of the electrode during rolling may be prepared.

The carbon nanotube structure may be included in an amount of 0.01 wt% to 0.5 wt% in the solid content of the electrode slurry, and may be specifically included in an amount of 0.02 wt% to 0.2 wt%. When the above range is satisfied, since the conductive path of the electrode is secured, the life characteristics of the battery may be improved while maintaining a low level of electrode resistance.

Next, the electrode slurry prepared as described above is coated and dried to form an electrode active material layer. Specifically, the electrode active material layer may be formed by a method of coating the electrode slurry on an electrode collector and drying the coated electrode collector, or may be formed by a method of coating the electrode slurry on a separate support and then laminating a film separated from the support on the electrode collector. If necessary, the electrode active material layer is formed by the above-described method, and a rolling process may then be further performed.

In this case, the drying and the rolling may be performed under appropriate conditions in consideration of physical properties of the electrode to be finally prepared, and are not particularly limited.

### Secondary Battery

Next, a secondary battery according to the present invention will be described.

The secondary battery according to the present invention includes the above-described electrode of the present invention. In this case, the electrode may be at least one of a positive electrode and a negative electrode. Specifically, the secondary battery according to the present invention may include a positive electrode, a negative electrode, a separator disposed between the positive electrode and the negative electrode, and an electrolyte, and, in this case, at least one of the positive electrode and the negative electrode may be the above-described electrode of the present invention, that is, the electrode which includes the electrode active material layer including the electrode active material and the carbon nanotube structure. Preferably, the electrode of the present invention may be a positive electrode. Since the electrode according to the present invention has been described above, a detailed description thereof will be omitted, and hereinafter, only the other components will be described.

The separator separates the negative electrode and the positive electrode and provides a movement path of lithium ions, wherein any separator may be used as the separator without particular limitation as long as it is typically used in a secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

As the non-aqueous organic solvent, for example, an aprotic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydroxy franc, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate, may be used.

Particularly, among the carbonate-based organic solvents, since ethylene carbonate and propylene carbonate, as cyclic carbonate, well dissociate a lithium salt due to high permittivity as a highly viscous organic solvent, the cyclic carbonate may be preferably used. Since an electrolyte having high electrical conductivity may be prepared when the above cyclic carbonate is mixed with low viscosity, low permittivity linear carbonate, such as dimethyl carbonate and diethyl carbonate, in an appropriate ratio and used, the cyclic carbonate may be more preferably used.

A lithium salt may be used as the metal salt, and the lithium salt is a material that is readily soluble in the non-aqueous organic solvent, wherein, for example, at least one selected from the group consisting of F-, Cl⁻, I-, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻ may be used as an anion of the lithium salt.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components.

The secondary battery according to the present invention as described above has better electrode adhesion and better life characteristics at high temperatures than a conventional secondary battery.

Hereinafter, the present invention will be described in detail, according to specific examples.

### Preparation Example 1: Preparation of Conductive Agent Dispersion

0.4 part by weight of bundle type carbon nanotubes (specific surface area of 650 m²/g) composed of single-walled carbon nanotube units having an average diameter of 1.5 nm and an average length of 5 um, 2.0 parts by weight of sodium dodecyl sulfate (SDS), and 2.0 parts by weight of polyvinylidene fluoride (weight-average molecular weight: 685,000 g/mol, Standard Homo-polymer) were prepared.

After adding the bundle type carbon nanotubes and the SDS to N-methylpyrrolidone (NMP) as a dispersion medium, first sonication was performed to prepare a mixture in which the bundle type carbon nanotubes were dispersed. The sonication was performed at an output of 1,000 W for 30 minutes.

After adding polyvinylidene fluoride to the mixture, sonication was performed (at an output of 1,000 W for 30 minutes) to prepare a conductive agent dispersion (solid content 4.4 wt%) including a carbon nanotube structure in the form in which 2 to 5,000 single-walled carbon nanotube units were bonded side by side.

In the conductive agent dispersion, an amount of the carbon nanotube structure was 0.4 wt%, an amount of the SDS was 2.0 wt%, and an amount of the polyvinylidene fluoride was 2.0 wt%.

### Preparation Example 2: Preparation of Conductive Agent Dispersion

A conductive agent dispersion was prepared in the same manner as in Preparation Example 1 except that the polyvinylidene fluoride was modified polyvinylidene fluoride (weight-average molecular weight 880,000 g/mol) containing 2.1 wt% of an acid functional group.

### Preparation Example 3: Preparation of Conductive Agent Dispersion

0.4 part by weight of bundle type carbon nanotubes (specific surface area of 650 m²/g) composed of single-walled carbon nanotube units having an average diameter of 1.5 nm and an average length of 5 um and 2.0 parts by weight of polyvinylidene fluoride (weight-average molecular weight: 685,000 g/mol, Standard Homo-polymer) were mixed in N-methylpyrrolidone (NMP), as a dispersion medium, to prepare a mixture such that a solid content was 2.2 wt%.

The mixture was stirred by sonication to disperse the bundle type carbon nanotubes in the dispersion medium to prepare a conductive agent dispersion. In this case, the sonication was performed at an output of 1,000 W for 1.5 hours. The conductive agent dispersion included a carbon nanotube structure in the form in which 2 to 5,000 single-walled carbon nanotube units were bonded side by side. In the conductive agent dispersion, an amount of the carbon nanotube structure was 0.4 wt and an amount of the polyvinylidene fluoride was 2.0 wt%.

### Preparation Example 4: Preparation of Conductive Agent Dispersion

4.0 parts by weight of bundle type carbon nanotubes (specific surface area of 185 m²/g) composed of multi-walled carbon nanotube units having an average diameter of 10 nm and an average length of 1 um, 1.0 part by weight of sodium dodecyl sulfate (SDS), and 0.8 part by weight of modified polyvinylidene fluoride (weight-average molecular weight 880,000 g/mol) containing 2.1 wt% of an acid functional group were prepared.

After adding the bundle type carbon nanotubes composed of multi-walled carbon nanotube units and the SDS to N-methylpyrrolidone (NMP) as a dispersion medium, first sonication was performed to prepare a mixture in which the bundle type carbon nanotubes were dispersed. The sonication was performed at an output of 1,000 W for 30 minutes.

After adding polyvinylidene fluoride to the mixture, sonication was performed (at an output of 1,000 W for 30 minutes) to prepare a conductive agent dispersion (solid content 5.8 wt%).

In the conductive agent dispersion, an amount of the multi-walled carbon nanotubes was 4.0 wt%, an amount of the SDS was 2.0 wt%, and an amount of the polyvinylidene fluoride was 0.8 wt%.

### Preparation Example 5: Preparation of Conductive Agent Dispersion

0.4 part by weight of bundle type carbon nanotubes (specific surface area of 650 m²/g) composed of single-walled carbon nanotube units having an average diameter of 1.5 nm and an average length of 5 um, 0.5 part by weight of sodium dodecyl sulfate (SDS), and 2.0 parts by weight of polyvinylidene fluoride (weight-average molecular weight: 685,000 g/mol, Standard Homo-polymer) were prepared.

After adding the bundle type carbon nanotubes and the SDS to N-methylpyrrolidone (NMP) as a dispersion medium, first sonication was performed to prepare a mixture in which the bundle type carbon nanotubes were dispersed. The sonication was performed at an output of 1,000 W for 30 minutes.

After adding polyvinylidene fluoride to the mixture, sonication was performed (at an output of 1,000 W for 30 minutes) to prepare a conductive agent dispersion (solid content 4.4 wt%) including a carbon nanotube structure in the form in which 2 to 5,000 single-walled carbon nanotube units were bonded side by side.

In the conductive agent dispersion, an amount of the carbon nanotube structure was 0.4 wt%, an amount of the SDS was 0.5 wt%, and an amount of the polyvinylidene fluoride was 2.0 wt%.

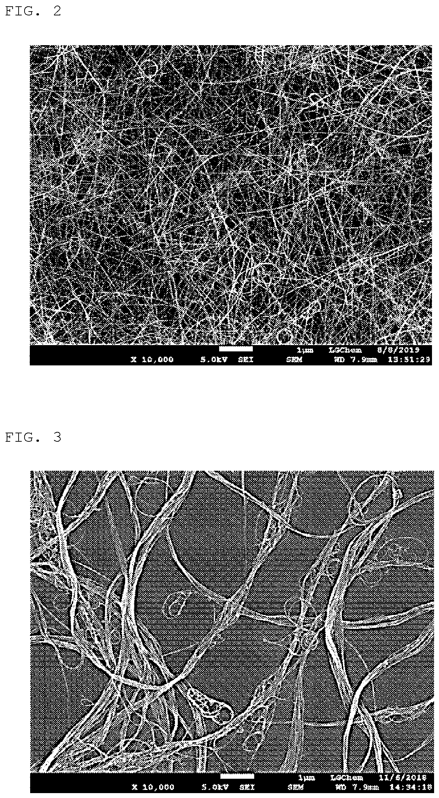

Referring to FIG. 2, it may be understood that the carbon nanotube structures were formed to have a relatively uniform diameter in the conductive agent dispersion of Preparation Example 1. In contrast, referring to FIG. 3, it may be understood that diameters of the carbon nanotube structures were not uniform in the conductive agent dispersion of Preparation Example 3.

### Examples and Comparative Examples

### Example 1: Preparation of Positive Electrode

LiNi_{0.6}Co_{0.2}Mn_{0.2}O₂ (NCM622) and modified polyvinylidene fluoride (modified PVDF, KF9700, weight-average molecular weight: 880,000 g/mol, containing 2.1 wt% of acid functional group) were added to the conductive agent dispersion of Preparation Example 1 and N-methylpyrrolidone (NMP) was further added to prepare a positive electrode slurry in which a solid content was 70.1 wt%. The positive electrode slurry was coated on a 20 um thick aluminum (Al) thin film current collector, dried at 130°C, and then rolled to prepare a positive electrode including a positive electrode active material layer.

97.9 wt% of the LiNi_{0.6}Co_{0.2}Mn_{0.2}O₂(NCM622), 1.8 wt% of the polyvinylidene fluoride, 0.25 wt% of the SDS, and 0.05 wt% of the carbon nanotube structure were included in the positive electrode active material layer. An amount of the modified polyvinylidene fluoride was 1.55 wt% based on a total weight of the polyvinylidene fluoride.

### Example 2: Preparation of Positive Electrode

A positive electrode was prepared in the same manner as in Example 1 except that 97.6 wt% of the LiNi_{0.6}Co_{0.2}Mn_{0.2}O₂(NCM622), 1.8 wt% of the polyvinylidene fluoride, 0.5 wt% of the SDS, and 0.1 wt% of the carbon nanotube structure were included in the positive electrode active material layer, and an amount of the modified polyvinylidene fluoride was 1.30 wt% based on a total weight of the polyvinylidene fluoride.

### Example 3: Preparation of Positive Electrode

A positive electrode was prepared in the same manner as in Example 1 except that the conductive agent dispersion of Preparation Example 2 was used instead of the conductive agent dispersion of Preparation Example 1.

### Comparative Example 1: Preparation of Positive Electrode

A positive electrode was prepared in the same manner as in Example 1 except that the conductive agent dispersion of Preparation Example 5 was used instead of the conductive agent dispersion of Preparation Example 1.

The positive electrode was prepared in the same manner as in Example 1 except that 98.0875 wt% of the LiNi_{0.6}Co_{0.2}Mn_{0.2}O₂(NCM622), 1.8 wt% of the polyvinylidene fluoride, 0.0625 wt% of the SDS, and 0.05 wt% of the carbon nanotube structure were included in the positive electrode active material layer, and an amount of the modified polyvinylidene fluoride was 1.55 wt% based on a total weight of the polyvinylidene fluoride.

### Comparative Example 2: Preparation of Positive Electrode

A positive electrode was prepared in the same manner as in Example 1 except that the conductive agent dispersion of Preparation Example 3 was used instead of the conductive agent dispersion of Preparation Example 1.

### Comparative Example 3: Preparation of Positive Electrode

A positive electrode was prepared in the same manner as in Example 2 except that the conductive agent dispersion of Preparation Example 3 was used instead of the conductive agent dispersion of Preparation Example 1.

### Comparative Example 4: Preparation of Positive Electrode

A positive electrode was prepared in the same manner as in Example 1 except that the conductive agent dispersion of Preparation Example 4 was used instead of the conductive agent dispersion of Preparation Example 1. The positive electrode was prepared in the same manner as in Example 1 except that 97.3 wt% of the LiNi_{0.6}Co_{0.2}Mn_{0.2}O₂(NCM622), 1.8 wt% of the polyvinylidene fluoride, 0.3 wt% of the SDS, and 0.6 wt% of the multi-walled carbon nanotubes were included in the positive electrode active material layer, and an amount of the modified polyvinylidene fluoride was 1.68 wt% based on a total weight of the polyvinylidene fluoride.

### Experimental Example 1: XPS Surface Defect Analysis

Bundle type carbon nanotubes (specific surface area of 650 m²/g) composed of single-walled carbon nanotube units having an average diameter of 1.5 nm and an average length of 5 um, PBA, PSA, PMA, and SDS were prepared, respectively. The bundle type carbon nanotubes and any one additive of the PBA, PSA, PMA, and SDS were added to NMP as a dispersion medium and, after sonication was performed at an output of 1,000 W for 30 minutes, drying was performed in a vacuum oven at 150°C for 24 hours to prepare surface-treated powder.
Sample 1: Additive was not used
Sample 2: Using PBA
Sample 3: Using PSA
Sample 4: Using PMA
Sample 5: Using SDS

Thereafter, after 500 g of each sample was mixed with zirconia balls using a desktop ball-mill (SH Sigma) and then ball-milled at 1,000 RPM for 30 minutes, surface defects were analyzed by using an X-ray photoelectron spectroscopy (XPS) instrument (JPS-9000MC, JEOL, JAPAN). As may be seen from XPS spectra of FIG. 1, in all samples except for Sample 5 using SDS, peaks corresponding to an oxygen functional group generated by the surface defects of the bundle type carbon nanotubes were observed in a region of 288 eV to 290 eV. In contrast, since such a peak was not observed in Sample 5, it may be understood that occurrence of the surface defects was suppressed.

### Experimental Example 2: Observation of Positive Electrode

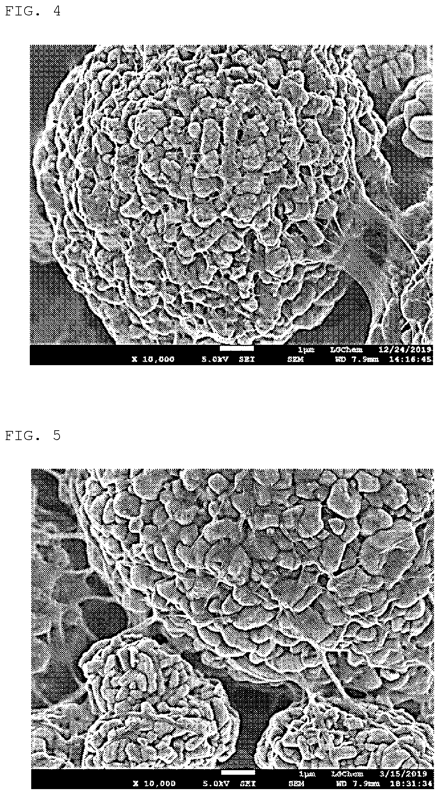

The active material layers of the positive electrodes prepared by Example 1 (FIG. 4) and Comparative Example 1 (FIG. 5) were observed by a scanning electron microscope.

Referring to the positive electrode of FIG. 4, it may be understood that a carbon nanotube structure, in which 2 to 10 single-walled carbon nanotube units were bonded side by side, was in the form of a rope, the carbon nanotube structure had an average diameter of about 10 nm and an average length of about 5.8 um, and the carbon nanotube structure had a relatively uniform diameter.

In contrast, referring to the positive electrode of FIG. 5, a carbon nanotube structure having an average diameter of about 100 nm and a relatively non-uniform diameter was observed.

### Experimental Example 3: Measurement of Powder Resistance of Positive Electrode Slurry

The positive electrode slurries used in the preparation of the positive electrodes of Examples 1 to 3 and Comparative Examples 1 to 4 were vacuum-dried at a temperature of 130°C for 3 hours and then ground to prepare powders. Thereafter, the powders were prepared as pellets under a load of 9.8 MPa at 25°C and a relative humidity of 50% using a Loresta GP instrument by Mitsubishi Chem. Analytec. Co., Ltd. Thereafter, powder resistance was measured by a 4-probe method. Measurement results are presented in Table 1 below.

### Experimental Example 4: Positive Electrode Adhesion Measurement

Adhesions of the positive electrodes of Examples 1 to 3 and Comparative Examples 1 to 4 were measured by a 90° peel test method.

Specifically, after a double-sided tape was attached to a slide glass and each electrode punched to a size of 20 mm×180 mm was placed thereon, a 2 kg roller was reciprocated 10 times to attach the electrode to the tape, and the electrode was then pulled at a rate of 200 mm/min using a universal testing machine (UTM, TA instruments) to measure a force detached from the slide glass. In this case, a measurement angle between the slide glass and the electrode was 90°. Measurement results are presented in Table 1 below.

### Experimental Example 5: Battery Life Characteristics Evaluation

A mono-cell was prepared by combining each of the positive electrodes of Examples 1 to 3 and Comparative Examples 1 to 4, a negative electrode, and a 15 um thick polyethylene-based separator. In this case, graphite, SBR/CMC, and a conductive agent were mixed in a weight ratio of 96.5:2.5:1 to prepare a negative electrode slurry, and the negative electrode was prepared by coating a 10 um thick copper foil with the negative electrode slurry and drying at 100°C. Then, an electrolyte solution, in which 1M LiPF₆ was dissolved in a mixed solvent of dimethyl carbonate (DEC) and ethylene carbonate (EC) (DEC:EC=1:1), was injected to prepare a lithium secondary battery.

After charging and discharging the lithium secondary battery prepared as described above 60 times under 0.33 C/0.33 C conditions at 45°C, life characteristics were measured from charge and discharge efficiency measured. Measurement results are presented in Table 1 below.

**[Table 1]**

| | Example 1 | Example 2 | Example 3 | Comparat ive Example 1 | Comparat ive Example 2 | Comparat ive Example 3 | Comparat ive Example 4 |
|---|---|---|---|---|---|---|---|
| Conductive agent amount (wt%) | 0.05 (carbon nanotube structur e) | 0.1 (carbon nanotube structur e) | 0.05 (carbon nanotube structur e) | 0.05 (carbon nanotube structur e) | 0.05 (carbon nanotube structur e) | 0.1 (carbon nanotube structur e) | 0.8 (multi-walled carbon nanotube unit) |
| SDS amount (wt%) | 0.25 | 0.50 | 0.25 | 0.0625 | - | - | 0.3 |
| Conductive agent:SDS weight ratio | 1:5 | 1:5 | 1:5 | 1:1.25 | - | - | 1:0.5 |
| Polyvinylidene fluoride amount (wt%) | 1.8 | 1.8 | 1.8 | 1.8 | 1.8 | 1.8 | 1.8 |
| Positive electrode slurry solid content (wt%) | 72 | 72 | 72 | 72 | 72 | 72 | 72 |
| Positive electrode slurry powder resistance (Ω·cm) | 25.3 | 21.7 | 27.5 | 38.1 | 41.5 | 36.2 | 73.9 |
| Positive electrode adhesion (gf/20mm) | 24.1 | 23.8 | 24.3 | 20.5 | 21.6 | 20.3 | 14.1 |
| Life characteristic s (%) | 97.4 | 98.5 | 97.1 | 95.7 | 95.3 | 96.6 | 93.8 |

## Claims

1. An electrode comprising an electrode active material layer,
wherein the electrode active material layer comprises:
an electrode active material;
a conductive agent; and
SDS (sodium dodecyl sulfate),
wherein the conductive agent comprises a carbon nanotube structure in which 2 to 5,000 single-walled carbon nanotube units are bonded to each other, and
a weight ratio of the carbon nanotube structure to the SDS is in a range of 1:3 to 1:30.

2. The electrode of claim 1, wherein the SDS is included in an amount of 0.1 wt% to 5 wt% in the electrode active material layer.

3. The electrode of claim 1, wherein the carbon nanotube structure is included in an amount of 0.01 wt% to 0.5 wt% in the electrode active material layer.

4. The electrode of claim 1, wherein the carbon nanotube structures are interconnected in the electrode to form a network structure.

5. The electrode of claim 1, wherein the single-walled carbon nanotube units are arranged side by side and bonded in the carbon nanotube structure.

6. The electrode of claim 1, wherein the carbon nanotube structure has an average diameter of 2 nm to 200 nm.

7. The electrode of claim 1, wherein the electrode active material layer further comprises polyvinylidene fluoride.

8. The electrode of claim 7, wherein a weight-average molecular weight of the polyvinylidene fluoride is in a range of 10,000 g/mol to 1,000,000 g/mol.

9. The electrode of claim 7, wherein the polyvinylidene fluoride comprises modified polyvinylidene fluoride including at least one functional group of an acid functional group and an ester functional group.

10. The electrode of claim 9, wherein the functional group is included in an amount of 0.1 wt% to 5 wt% in the modified polyvinylidene fluoride.

11. The electrode of claim 1, wherein the electrode is a positive electrode.

12. A secondary battery comprising the electrode of claim 1.
